# EUROPEAN PATENT APPLICATION

(11) **EP 4 822 574 A1**
(43) Date of publication of application: **14.10.2026**
(21) Application number: 25169890.8
(22) Date of filing: 10.04.2025
(51) Int. Cl.: G06F 21/62, H04L 9/40, G06F 21/60

(54) **AN IMPROVED COMMUNICATION PROTOCOL**

(71) Applicant: Vaultree, Ltd., Cork T12 RD43 (IE)
(72) Inventor: SPALKA, Adrian, Cork, T12 RD43 (IE)
(74) Representative: Gillespie, Richard

(57) **Abstract**

The present disclosure is directed towards a system and method of access control which does not require the use of a trusted third party. Instead, access control information is stored in a graph.

## Description

### Field

The present disclosure is directed towards an improved communication protocol.

### Background

In cryptography, a trusted third party (TTP) facilitates interactions between two parties who both trust the third party. The third party reviews all critical transaction communications between the parties, based on the ease of creating fraudulent digital content. In TTP models, the other parties use this trust to secure their own interactions.

If a party has the technical ability to access more data than it needs to know, then it is a trusted party, eg the administrator of the storage place provider. If this party is considered not to belong to the core parties, viz an artificially adjoined party, like an external certification authority (CA) or a key management service (KMS), then it is denoted as a trusted third party (TTP).
The usage of trusted parties in an information system indicates a lack of technical control measures. Therefore, there is a need to eliminate or minimise the number of TTPs in an information system.

TTPs are ubiquitous in the field of access control. Most, if not all, well-established cryptographic frameworks use TTPs to verify identities and manage access control. The use of a TTP means that it is not essential for a developer to build and maintain their own access control mechanisms; they simply integrate a system with a TTP. In addition, many systems use a centralized authentication authority (e.g., OAuth providers like Google, Facebook, or enterprise identity providers) to act as a TTP because they simplify user authentication. As such the vast majority of systems in the field of access control rely on the use of a TTP.

However, TTPs result in many systems having a single shared point of failure, such that if a TTP is compromised, all dependent services become vulnerable, and data stored with any dependent service may be compromised. As a result, there is a need to obviate the present requirements for TTPs for access control such that data may be securely stored.

TTPs are widely used in the field of access control to the extent that attempts to obviate their use, such as those described in US 11,777,735, merely result in their functions being redistributed between three parties in an access control system. As a result, secrets are shared over unsecure channels exposing users to the risk that their data will be compromised.

It is widely accepted that client-side encryption, also denoted as end-to-end encryption in communication systems, is the best method for protecting confidentiality in any cloud-based information systems. In particular, if the encryption system is robust and the customer never gives the decryption keys away, then confidentiality cannot be broken - no matter what other party may get access to the encrypted data - because the other party will not have the right decryption keys.

However, existing solutions, such as those disclosed in the 3^{rd} edition of MEGA Security White Paper of June 2022 suffer from a number of significant drawbacks. For example, while all files are encrypted before being uploaded, the MEGA system still manages user authentication acting as a trusted third party, meaning its system determines access rights. As a result, if compromised, access policies could be altered. Further, a user's encryption key is generated using their password and at least a portion of this key is stored in encrypted form on MEGA's servers. This means an attacker who gains control over MEGA's infrastructure may still find ways to exploit weak passwords or key exchanges. In short, while data is encrypted, the server infrastructure still governs authentication and access requests, meaning a rogue or compromised MEGA administrator could manipulate access logs or user roles.

Furthermore, the MEGA system generates shareable links that include decryption keys, allowing other users to access files. While some links can be password-protected, the encryption key is still part of the link unless removed. Thus, if a link is leaked, an attacker can access the data, even without breaching MEGA's servers.

### Object

As such there is a need to provide an improved system that overcomes and method that overcomes these and other problems with the prior art. As such, the present disclosure is directed towards a system and method that overcomes provides end to end security (e.g. End-to-End Encryption (E2EE)), and eliminates the present reliance on shared secrets. Preferably, such a system and method do not reduce application performance, speed, or functionality. Ideally, the method and system also enable real-time full-text search (e.g. on encrypted documents, such as e.g. word or PDF files, and metadata in a document management systems (DMS)).

### Summary

The present disclosure is directed towards an access control system configured to manage the access control data of one or more entities, wherein: the access control data of an entity is the data identifying the rights the entity has to access a storage unit in one or more software or hardware systems, and the access control data is stored in a graph.

Preferably, the graph comprises a node connected to a storage unit by an edge. Preferably, the graph comprises a root node for an entity, wherein the root node comprises data required for the entity to access the graph. Preferably, the graph comprises a rules node, wherein the rules node comprises access data relating to one or more of a role, an active entity group, a directory, or any other element which relates to access to storage unit.

Preferably, the rules node is a group node representing group membership, role association, or directory access. Preferably, one or more root nodes are connected to the rules node by an edge. Preferably, the rules node is connected to another rules node by an edge. Preferably, at least one rules node is connected to a storage unit by an edge. Preferably, at least one root node is connected to a storage unit by an edge.

Preferably, the access control system comprises a GUI configured to display the graph.

The present disclosure is also directed towards a method of administering access control system, wherein the method comprises: managing the access control data of one or more entities, wherein the access control data of an entity is the data identifying the rights the entity has to access a storage unit in one or more software or hardware systems, and storing the access control data in a graph.

Preferably, the method comprises storing information indicative of a node connected to a storage unit by an edge in the graph. Preferably, the method comprises storing information indicative of a root node for an entity in the graph, wherein the root node comprises data required for the entity to access the graph. Preferably, the method comprises storing information indicative of a rules node in the graph, wherein the rules node comprises access data relating to one or more of a role, an active entity group, a directory, or any other element which relates to access to storage unit

The present disclosure is also directed towards a computer program comprising instructions which, when the program is executed by a computer, cause the computer to carry out the method described above. The present disclosure is also directed towards a computer-readable medium comprising instructions which, when executed by a computer, cause the computer to carry out the method described above.

### Brief Description of the Drawings

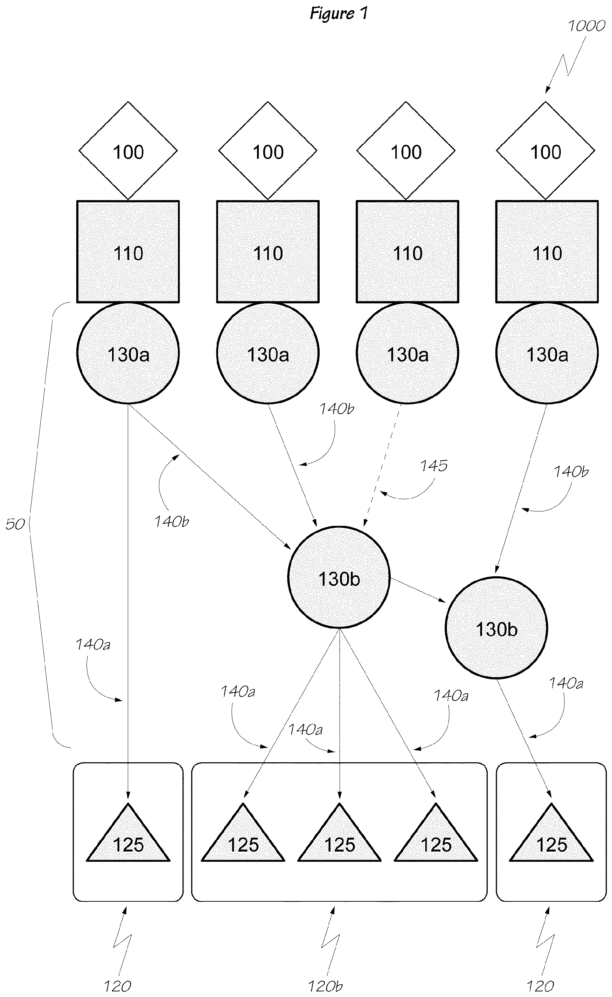

The invention will be more clearly understood from the following description of an embodiment thereof, given by way of example only, with reference to the accompanying drawings, in which:-
Figure 1 shows an example of an access control system implemented using a graph according to the present disclosure.

### Detailed Description

Access control, which is also referred to in the art as identity management (ID management) or identity and access management (IAM), is the technical process of authorizing access rights to a software ecosystem such as a cloud-based file server or the like. Access control may comprise registering entities access rights. Access control may also comprise identifying, authenticating, or controlling the entities or groups of entities that have access to applications, systems, or networks based on previously authorized access rights. Thus, access control systems are used to manage information about the rights one or more entities have for using software or hardware systems. Such information may comprise information that authenticates the identity of an entity, and information that describes data or actions they are authorized to access or perform. It may also include the management of descriptive information about the entities and how and by whom that information can be accessed and modified. In addition to users, managed entities typically include hardware and network resources and even applications.

The present disclosure is based on the surprising insight that the functions of a trusted third party are not needed in an access control system in order to provide a secure system. Instead, one or more of the structures of a traditional access control model, such as e.g. ACLs, roles, groups and directories, may be translated into a graph (G). As used in this disclosure, a graph is a form of data which is suitable for storing data points and the relationship between the data points. The data points are referred to in this disclosure as nodes (which are also known in the art as vertices or points) and, where a relationship exists between two nodes, the relationship is referred to as an edge (which is also called link or line). Thus, a graph comprises nodes and edges. Typically, a graph is displayed in diagrammatic form. In particular, the nodes are typically displayed as a set of dots or circles and, where a relationship exists between two nodes, the edge is typically displayed as a line connecting the two nodes. For example, the nodes may represent people in a bar, and an edge connecting two nodes may indicate that the two people represented by the nodes know each other.

As used in this disclosure, the word 'or' refers to an inclusive or (i.e. A or B refers to any one of the following list: A; B; A and B. The word 'xor' refers to an exclusive or (i.e. A xor B refers to one of the following list: A; B.

Graphs are known in the field of compiler design. In particular, they are used to ensure optimized code generation by observing and eliminating superfluous operations. As such they are used to prevent memory and computational overheads.

Thus, according to the present disclosure, access rules may be set or enforced by constructing or managing a graph. The graph may be constructed or managed on one or more terminal devices. As a result, the structure and content of the graph may be secured by applying a semantic distortion function (SDF) at a client device or by applying an integrity violation recognition function (IVRF) at a client. Any suitable SDF or IVRF known in the art may be used.

A SDF transforms a piece of data D into a piece of data C such that the semantics of D is different from the semantics of C, and the semantics of D cannot be computed or otherwise reconstructed from C. An SDF is often used to transform non-confidential data D into confidential data C. The SDF may also be used to transform confidential data C into non-confidential data D with the use of an additional data item.

One example of an SDF may be a steganography function F. The steganography function receives a text T and a picture P as inputs. The output is a picture P' which has been altered such that the text T is embedded in picture P'. To an observer P and P' look the same, and the presence of T in P' is indiscernible. However, the text T can be recovered from P' with the additional knowledge of F.

Another example of an SDF is an Auguste Kerckhoffs style encryption function F (i.e. one that conforms to Kerckhoffs's six principles). Such a function receives a text T and an encryption key k as inputs and provides a data output C. For an observer knowing C and F it is impossible in practice to reconstruct T. However, T can be recovered from C with the additional knowledge of a decryption key k'.

An IVRF is a function which is used to identify if the integrity of a data object has been compromised or if the data object has been tampered with. An IVRF performs a function on a piece of data D that returns at least two parameters. In particular, the IVRF returns a first parameter indicative of the data D being genuine - i.e. the integrity of D has not been violated. IVRF returns also returns a second parameter which is not indicative of the data D being genuine - i.e. an undecided result. An undecided result means that the integrity of D cannot be confirmed. As a result, integrity of D is possibly violated and connot be trusted. Any suitable IVRF may be used. Examples of IVRF include a cyclic redundancy check (CRC) function, a message authentication code (MAC) function, a digital signature system, etc.

As a result, active entities are provided with control over access control in the Cloud. Further, a system in accordance with the present disclosure treats read-access rules as elements that are protected with client-side encryption. As used in the present disclosure refers to an entity that is using the system - e.g. a user, software agent, server, service, IoT etc.

This is achieved by translating one or more structures of a traditional access control model, such as ACLs, roles, groups, directories, etc. into a graph. The graph is configured to map all one or more elements of an access control model into nodes and edges. Further, given the flexibility of a graph, ideally all the elements of an access control model can be configured using a graph. Access rules are preferably set and enforced by constructing and managing the graph on an active entity's terminal device(s). As a result, the structure and content of the graph is secured with client-side encryption or client-side generated IVRFs.

Figure 1 shows a system 1000 according to the present disclosure. In particular, an active entity terminal 100 is able to access a data storage unit 120 via the nodes 130 of a graph 150. As used in this disclosure, a data storage unit 200 refers to a file, document, or the like which is used to store data.

Each active entity terminal 100 is provided with their own personal node 130a. In addition, a rules node 130b may also be provided. The rules node may be used to represent one or more of a role, an active entity group, a directory, or any other element in the active entity's environment which relates to the active entity's access to a storage unit. A node 130 is preferably provided with its own set of cryptographic keys, which is described later in more detail.

Each node 130 is signed by an access control administrator (ACA). The ACA administers the access control structure, e.g. enrolment of active entities 100 and creation of groups. But ACA never obtains access to a decryption key. As such the ACA is only allowed create nodes 130.

The edge 140a of a graph 150 connecting a node 130 and a data storage unit 120 (e.g. a PDF file) may be used to specify that the data storage unit 120 is encrypted with a secret key of the node 130 at the edge's 140a origin. The edge 140b connecting a first node and a second node specifies that the key of the node 130 at the origin of the edge 140b (i.e. the first node) may be used to encrypt the key of the node at the target of the edge 130 (i.e. the second node). Preferably, each edge 140 is signed by the active entity who created it. Since the ACA does not have access to keys, the ACA cannot create edges 140. As such, an incoming edge 140 to a rules node for representing a group (a group node 130b) likewise represents group membership, role association, or directory access. Hence, the keys of a group node are known only to its members.

A dotted edge 145 represents a message comprising a recommendation signed by the ACA to add a new active entity (or a group) to a target group. This message is preferably reviewed by at least one member of the target group. As only the member(s) of a group are able to add a member or group to the target group, the at least one member reviewing the message is effectively the target group's gatekeeper. As such the member of the group selected or otherwise assigned to perform such a review is referred to in this disclosure as the gatekeeper. If the recommendation from the ACA is rejected by the gatekeeper, the recommendation is not followed. In particular, the recommended member or group is not added to the target group.

If the recommendation from the ACA is accepted by the gatekeeper, the gatekeeper encrypts the target group's secret key with the public key of the target group's group node 130b at the origin of the edge 145 (i.e. the public key of the recommended active entity or group) and places the encrypted key in the recipient's mailbox (i.e. the mailbox of the recommended active entity or group). Preferably, the recipient's mailbox is provided stored as a table in the cloud.

As a result, membership of a group is controlled by the existing membership. Thus, by default, the ACA does not have access to data about the membership of a group. However, if an active entity so wishes, the ACA may be added to the group in the same way as any other active entity as outlined above. As a result, the ACA will be granted the same access to the group as any other active entity. The use of a graph 150 allows a system in accordance with the present disclosure to keep conceptually separate responsibilities also technically separate.

A node 130 can be configured to access a data storage unit, which is also referred to in this disclosure as a protected unit (PU). The PU 120 is a storage means for storing data items 125, for example on or more files. A file shown inside a PU 120 is encrypted with the key of the node 130 at the origin of the edge 140 connected to the PU 120 (i.e. the node 130 pointing to PU 120). As such, all files 125 in the same PU 120 are encrypted with the same key. Further, if the node 130 pointing to a PU 120 is a group node 130b, the data items in the PU 120b are shared by the members of the group node 130b pointing to it. As a result, a system in accordance with the present application allows data stored in a PU 120 to be shared.

A system 1000 in accordance with the present disclosure may be accessed by an active entity 100 using an external security anchor 110. The external security anchor 110 is any type of credentials used in by the active entity 100 to access nodes 130 of the system 1000. For example, a security anchor 110 may be a personal secret. Such a personal secret may be to the system at run-time. The personal secret may be provided by a smartcard, USB stick, fingerprint, smartcard, a personal secret embedded in an IoT device, a certificate of a software agent, or any other suitable means known in the art. Preferably, the external security anchor (ESA) 110 is that is not stored. As a results, the ESA 110 cannot be accessed or copied as is not available on in the Cloud, not on any terminal device, or anywhere else within a system 1000 according to the present disclosure.

In use, an active entity provides their ESA 110 to an application on a client device at run-time as a login parameter by the active entity (or identity) 100. The ESA 110 is then used at the client to derive cryptographic keys. Preferably, the keys derived from an ESA 110 are deleted at the end of a session and are not stored anywhere after a session has ended. Instead, they are re-derived each time the active entity enters their ESA 110 into the application on their terminal device. For example, each time the active entity 100 U logs in and enters their personal secret P the key *w_{U}* is recomputed *f(P,U,...) = w_{U},* where the key derivation function may take additional situational parameters, such as device identity or geo location. At the end of a session all keys are deleted from memory, including *w_{U}*. The client is also preferably configured to discard the ESA 110 immediately after the cryptographic keys have been generated.

The ESA 110 provides an active entity 100 with an entry point to their data which is stored in one or more PUs 120. The active entity 100 can access a PU 120 by decrypting reachable nodes 130 and traversing the graph nodes 130 to which they have access via edges 140 until they reach the PUs 120 to which they have access. As such the active entity can access encrypted data from a PU. The active entity 100 then uses their own decrypt key to decrypt, at the client, the data they have accessed.

As a result, security depends on the confidentiality of the external security anchors 110, and similarly to existing systems an active entity 100 will need to keep their personal secrets secret. However, in contrast with existing systems, there is no trusted third party. Thus, as an active entity's 100 decryption key remains client side and is not provided to another entity. As such, it is not possible to steal data from a server (such e.g. decryption personal secrets) that could endanger confidentiality. As a server will no longer need to store a large number of decryption keys, its attraction as a target for hacking will be reduced.

Access administration using a graph 150 can comprise creating one or more nodes 130, creating one or more edges 140, moving one or more edges 140, deleting one or more nodes 130, or deleting one or more edges 140. As a result, any access right modification is clearly identifiable from the graph 150 at a declarative level which can be displayed to provide a clear visualisation of access rights allowing an active entity 100 to easily determine indirect effects and side effects of a change to the access control rules. This contrasts with existing access control systems, where it is practically impossible to determine indirect effects and side effects of a change to the access control rules.

According to the present disclosure, an active entity 100 can assign the administration of access control to a separate entity, namely an access control administrator (ACA). By default, the node for the ACA in the graph is disconnected. As such, the ACA may be a node without any outgoing edges, and therefore may have no edges connected to the active entity-part (where the active entity part is the portion of the graph that allows an active entity to access a PU).

As discussed above, joining a group is preferably a two-step process comprising issuing a digitally signed recommendation by the ACA and a mandatory subsequent decision by a group's gatekeeper. Thus, any attempt to introduce a mole by a malicious or compromised ACA is easily detected by the gatekeeper.

As a result of the use of a graph 150, a system 1000 according to the present disclosure does not contain protection mechanisms against insider corruption (i.e. a rogue entity enrolled in a group). An active entity 100 or any other entity enrolled by the ACA and granted access to the graph 150 by the gatekeeper may access a resulting subset of documents 125 on grounds the graph 150 cannot verify or question. In other words, the access control provided by the use of a graph 150 respects the need to know expressed in the graph 150. The graph 150 has no means to decide if an operation concordant with the need to know is performed with a malicious intent. However, tools may be provided to detect anomalies which in turn may be used to detect a corrupt insider.

Administration of the graph 150 offers the ACA the same active entity 100 interface as any traditional access control management system. However, the present system 1000 is distinguished by the set of cryptographic operations triggered by starting a session.

In order to enrol, a new active entity 100 contacts the ACA. To enrol the new active entity 100, the ACA selects a set of credentials for the new used. The set of credentials is a set of data that may be used to identify or authenticate the active entity 100. For example, the ACA may select an identifier (e.g. a unique active entity identifier (UID), a unique active entity name, etc.) for use in the set of credentials. The ACA also preferably selects or generates an initial shared secret for the active entity. As used in this disclosure, a shared secret is a secret known to a first entity (A) which is supplied at the system at run-time by a second entity (B). Preferably the shared secret is a one-time shared secret. The ACA transmits the set of credentials to the new active entity 100 via a confidentiality protected channel. The set of credentials may alternatively be provided via a smart card, USB stick, hardware token, etc.

A system according to the present disclosure will also, on behalf of the ACA, create a new root node 130a for the new active entity. The system preferably designates the new active entity as the gatekeeper for the new root node 130a. The data relating to the new root node 130a is also transmitted by the system to the new active entity 100 via the confidentiality protected channel. Preferably, the data transmitted to the new active entity 100 is signed by the system.

Preferably, the system 1000 generates the shared secret from the unique identifier using any suitable means known in the art. Preferably, the shared secret is a secret key. More preferably, the system 1000 also generates a public key which can be used to verify the active entity's 100 shared secret. In this case, the system 1000 deletes the active entity's 100 shared secret once it has been transmitted to the active entity over the confidentiality protected channel so that the ACA system does not store any information that could be used to compromise an active entity's confidentiality. As such, only the new active entity 100 can use the shared secret to preserve confidentiality.

Significantly, apart from the shared secret, the ACA system does not create any other keys for the active entity.

It is also possible to enrol a new non-human entity through the creation of a root node 130 for the new non-human entity as set out above, so long as it is possible to create and communicate an initial shared secret between the new non-human entity and the ACA.

To create a new group, the ACA creates a new group node 130b by selecting a unique node name. An active entity 100 (e.g. an active entity that requested the creation of the group) is selected as the gatekeeper for the new group node 130b. The data relating to the new group node 130b is provided its gatekeeper. Preferably, the data relating to the new group node 130b is signed by the ACA system. Optionally, the ACA may issue one or more recommendations for incoming edges 140b to the new group node 130b (e.g. if the request for the new group node 130b included data identifying potential members for the new group). As a result, the ACA system is able to create a group node 130b without the need to create any keys or personal secrets. Instead, the gatekeeper's system is configured to generate a personal secret to access the group node 130b as soon as the gatekeeper logs in.

According to the present disclosure, adding a member to a group results in adding an edge 140b to the group node 130b associated with the group. In order to do this, the ACA preferably sends a recommendation for a new group member to the group's gatekeeper by recommending the provision of an incoming edge. The recommendation may be a notification generated based on an input from the ACA (e.g. the drawing of a dotted incoming edge 145 in a representation of the graph 150 in a graphic user interface (GUI)). This causes the system to place a message comprising the recommendation in the gatekeeper's mailbox. The notification comprises data identifying the recommended new group member (or a recommended new group). Preferably, the message is digitally signed.

The gatekeeper then able to access and read the ACA's message. Preferably, if the message was signed, the signature is verified. The gatekeeper may then accept or reject the recommended new member (or the recommended new group).

If accepted, the gatekeeper encrypts the group node's root key with the recommended new member's public key (or the recommended new group's public key) for asymmetric encryption. The gatekeeper may then place the encrypted key in the recommended new member's mailbox (or the mailbox for the recommended new group).

To remove a member from a group, the edge 140 of the graph connecting the member to the group is deleted by the ACA. In particular, as membership of A in a group B manifests in the existence of an edge 140 in the graph 150 pointing from active entity 100 A to group node 130b B. Thus, to remove active entity A from group B, the ACA deletes this edge. As long as there is no path of edges 140 connecting an active entity 100 to a group node 130b, the active entity 100 will not be able to access the group.

A terminal node 130a (which is also referred to a as a root node in the present disclosure) is required for any entity 100 to access a system 1000 according to the present disclosure. All access of an active entity or entity in the graph 150 passes through this node 130a. As noted above, the enrolment of an active entity 100 by the ACA preferably comprises creating and signing the active entity's (or entity's) terminal node 130a. Thus, there are at least two ways in which the ACA may remove an active entity 130a from the system. In particular, the ACA may delete the active entity's 100 (or entity's) terminal node 130a.

Alternatively, the ACA may delete all edges 145 connected to the active entity's (or entity's) terminal node 130a, while preserving the terminal node 130a. By retaining the terminal node 130a, it is still possible to verify the active entity's (or the entity's) IVRFs, thereby providing a means to track of the active entity's (or the entity's) actions in the graph 150.

Adding an active entity 100 to a group indicates the intention of granting the active entity long term access to the PUs 120 which may be accessed by the group. However, if only an ad hoc copy of, eg, a file ought to be shared, then this file may be encrypted with the active entity's public key for asymmetric encryption and placed in the active entity's mailbox.

A feature of a system 1000 in accordance with the present disclosure in that encrypted data may only be decrypted client side at an active unit. Thus, confidential data should not be accessible on the Cloud. As a result, data is preferably imported into a PU 120 via an active entity terminal 100. In particular, a file may be placed on an active entity's terminal device, e.g. their PC in plain-data (i.e. plain-text) form. Preferably, the active entity 100 applies a IVRF to the plain-data file. When the active entity uploads this document to the cloud, it is encrypted at their terminal before being uploaded. Similarly, when an active entity downloads a document from the cloud, it is preferably automatically decrypted during the session so that plain-data processing on the file is performed at the terminal(s) of the active entity(s) who have access rights to the PU where the encrypted version of the file is stored.

Optionally, the active entity may generate a IVRF and sign the encrypted file for compliance. For example, the active entity 100 may encrypt the file. The active entity 100 may then generate a IVRF and use it to sign the encrypted file. The file is preferably compressed (e.g. zipped), to maximise its entropy prior to being encrypted. The encrypted file and its IVRF(s) may then be transmitted to the Cloud.

As noted above, according to the present disclosure, no document can be provided to the cloud in plain-data (i.e. plain-text) form. As a result, data from a PU 120 is preferably exported via an active entity's terminal.

In particular, an active entity 100 with access rights to a PU 120 (as defined by a graph 150) may select a file 125 with its IVRFs to download from the PU 120 to their terminal. The active entity 100 verifies the IVRF on the encrypted file. If the signature is successfully verified, the active entity 100 decrypts the file 125. If the file 125 has been compressed, the active entity 100 decompresses (e.g. unzips) the file 125. If the plain-data file has been signed with an IVRF, the active entity 100 may verify the IVRF on the plain-data file. The active entity 100 may then export the plain-data version of the file from their terminal.

## Claims

**1.** An access control system configured to manage the access control data of one or more entities, wherein:
the access control data of an entity is the data identifying the rights the entity has to access a storage unit in one or more software or hardware systems, and
the access control data is stored in a graph.

**2.** The access control system of claim 1, wherein the graph comprises a node connected to a storage unit by an edge.

**3.** An access control system according to claim 1, wherein:
the graph comprises a root node for an entity, wherein the root node comprises data required for the entity to access the graph.

**3.** An access control system according to claim 1 or 2, wherein the graph comprises a rules node, wherein the rules node comprises access data relating to one or more of a role, an active entity group, a directory, or any other element which relates to access to storage unit.

**4.** The access control system of claim 3, wherein the rules node is a group node representing group membership, role association, or directory access.

**5.** The access control system of claims 3 or 4, wherein one or more root nodes are connected to the rules node by an edge.

**6.** The access control system of any one of claims 3 to 5, wherein the rules node is connected to another rules node by an edge.

**7.** The access control system of claim 3 to 6, wherein at least one rules node is connected to a storage unit by an edge.

**8.** The access control system of claims 2 to 7, wherein at least one root node is connected to a storage unit by an edge.

**9.** The access control system of any preceding claim comprising a GUI configured to display the graph.

**10.** A method of administering access control system, wherein the method comprises:
managing the access control data of one or more entities, wherein the access control data of an entity is the data identifying the rights the entity has to access a storage unit in one or more software or hardware systems, and
storing the access control data in a graph.

**11.** The method of claim 10, comprising storing information indicative of a node connected to a storage unit by an edge in the graph.

**12.** The method of claim 10 or 11, comprising storing information indicative of a root node for an entity in the graph, wherein the root node comprises data required for the entity to access the graph.

**13.** The method of anyone of claims 10 to 11, comprises storing information indicative of a rules node in the graph, wherein the rules node comprises access data relating to one or more of a role, an active entity group, a directory, or any other element which relates to access to storage unit

**14.** A computer program comprising instructions which, when the program is executed by a computer, cause the computer to carry out the method of any one of claims 10 to 12.

**15.** A computer-readable medium comprising instructions which, when executed by a computer, cause the computer to carry out the method of any one of claims 10 to 12.
